# EUROPÄISCHE PATENTANMELDUNG

(11) **EP 3 739 158 A1**
(43) Veröffentlichungstag der Anmeldung: **18.11.2020**
(21) Anmeldenummer: 20185500.4
(22) Anmeldetag: 12.03.2015
(51) Int. Cl.: E05F 1/10, E05F 5/02

(54) **STELLANTRIEB FÜR MÖBELKLAPPEN**

(30) Priorität: 02.05.2014 AT 3222014
(62) Teilanmeldung aus: 15715659.7
(71) Anmelder: Julius Blum GmbH, 6973 Höchst (AT)
(72) Erfinder: SCHLUGE, Philip, 6850 Dornbirn (AT)
(74) Vertreter: Torggler & Hofinger Patentanwälte

(57) **Zusammenfassung**

Stellantrieb (4) zum Bewegen einer Klappe (3) eines Möbels (1), umfassend:
- ein Gehäuse (6),
- zumindest einen am oder im Gehäuse (6) schwenkbar gelagerten Stellarm (5) zum Bewegen der Klappe (3),
- eine Federvorrichtung (8) zur Kraftbeaufschlagung des Stellarmes (5),
- einen Übertragungsmechanismus (10) zum Übertragen einer Kraft der Federvorrichtung (8) auf den Stellarm (5),
- eine Einstellvorrichtung (23), durch welche eine Hebelgeometrie des Übertragungsmechanismus (10) und/oder die auf den Stellarm (5) wirkende Kraft der Federvorrichtung (8) veränderbar einstellbar ist,
- eine Dämpfvorrichtung (32), durch die bei einem Dämpfungshub eine Bewegung des Stellarmes (5) mit einer Dämpfleistung dämpfbar ist,
wobei die Einstellvorrichtung (23) über eine Koppelvorrichtung (18) mit der Dämpfvorrichtung (32) gekoppelt ist, wobei bei einer Einstellung der Einstellvorrichtung (23) über die Koppelvorrichtung (18) die Lage der Dämpfvorrichtung (32) relativ zum Gehäuse (6) und/oder der Dämpfungshub der Dämpfvorrichtung (32) und/oder die Dämpfleistung der Dämpfvorrichtung (32) veränderbar einstellbar ist.

## Beschreibung

Die vorliegende Erfindung bezieht sich auf einen Stellantrieb zum Bewegen einer Klappe eines Möbels, umfassend:
- ein Gehäuse,
- zumindest einen am oder im Gehäuse schwenkbar gelagerten Stellarm zum Bewegen der Klappe,
- eine Federvorrichtung zur Kraftbeaufschlagung des Stellarmes,
- einen Übertragungsmechanismus zum Übertragen einer Kraft der Federvorrichtung auf den Stellarm,
- eine Einstellvorrichtung, durch welche eine Hebelgeometrie des Übertragungsmechanismus und/oder die auf den Stellarm wirkende Kraft der Federvorrichtung veränderbar einstellbar ist,
- eine Dämpfvorrichtung, durch die bei einem Dämpfungshub eine Bewegung des Stellarmes mit einer Dämpfleistung dämpfbar ist.

Im Weiteren betrifft die Erfindung eine Anordnung mit einer Klappe eines Möbels und mit einem Stellantrieb der zu beschreibenden Art.

In der WO 2013/113047 A1 der Anmelderin ist ein Stellantrieb mit den Merkmalen des Oberbegriffs des Patentanspruchs 1 offenbart. Durch eine Umstellvorrichtung ist die Hebelgeometrie des Stellantriebes zwischen verschiedenen Betriebsmodi umstellbar. In einem ersten Betriebsmodus übt die Federvorrichtung auf den Stellarm in oder nahe der Schließstellung eine Schließkraft aus, sodass die mit dem Stellarm verbundene Klappe gegen Ende der Schließbewegung auch in die vollständig geschlossene Endlage eingezogen wird. Durch Verstellen einer Gelenkachse (welche zwei Hebel des Übertragungsmechanismus miteinander gelenkig verbindet) ist der Stellantrieb in einen zweiten Betriebsmodus schaltbar, in welchem die Federvorrichtung auf den Stellarm in der Schließstellung ein Drehmoment in Öffnungsrichtung ausübt, sodass also der Stellarm bereits in der Schließstellung öffnend wirkt. Durch das Umstellen zwischen diesen beiden Betriebsmodi wird auch die Totpunktlage des Stellarmes (d.h. jene Schwenklage des Stellarmes, in welcher der Stellarm von der Federvorrichtung weder in Schließrichtung noch in Öffnungsrichtung beschleunigt wird) verändert. Für den gesetzten Fall, dass eine Dämpfungsvorrichtung in Form eines Auflaufdämpfers zum Dämpfen der Schließbewegung des Stellarmes vorgesehen ist, führt eine Verstellung der Totpunktlage des Stellarmes auch zu einer Veränderung des Wirkbeginns der Dämpfungsvorrichtung. Konkret bedeutet dies, dass die Dämpfwirkung entweder zu früh oder zu spät einsetzt, sodass die Schließbewegung einer mit dem Stellarm verbundenen Klappe nicht ordnungsgemäß gedämpft wird.

Aufgabe der Erfindung ist es, einen Stellantrieb der eingangs erwähnten Gattung unter Vermeidung des oben angeführten Nachteiles anzugeben.

Dies wird erfindungsgemäß durch die Merkmale des Patentanspruchs 1 gelöst. Weitere vorteilhafte Ausgestaltungen der Erfindung sind in den abhängigen Unteransprüchen angegeben.

Gemäß der Erfindung ist also vorgesehen, dass die Einstellvorrichtung über eine Koppelvorrichtung mit der Dämpfvorrichtung gekoppelt ist, wobei durch eine Einstellung der Einstellvorrichtung über die Koppelvorrichtung die Lage der Dämpfvorrichtung relativ zum Gehäuse und/oder der Dämpfungshub der Dämpfvorrichtung und/oder die Dämpfleistung der Dämpfvorrichtung veränderbar einstellbar ist.

Gemäß einer bevorzugten Ausführungsform weist die Dämpfvorrichtung einen als Fluiddämpfer ausgebildeten Lineardämpfer mit einer Kolben-Zylinder-Einheit auf.

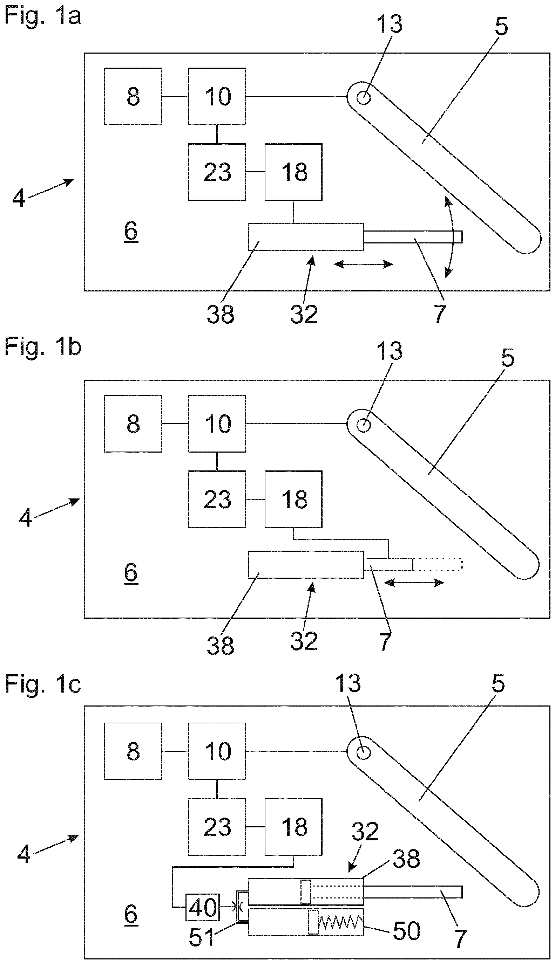

Die Erfindung beruht auf dem Grundgedanken, dass durch eine Betätigung der Einstellvorrichtung über die Koppelvorrichtung zumindest einer der nachfolgenden Parameter der Dämpfvorrichtung mitverstellt wird, nämlich:
1.) die Lage der Dämpfvorrichtung relativ zum Gehäuse des Stellantriebes. Die Dämpfvorrichtung kann dabei in ihrer Gesamtheit relativ zum Gehäuse des Stellantriebes verstellt werden, wobei der maximale Hub der Dämpfvorrichtung konstant bleibt (Fig. 1a).
2.) Der maximale Hub der Dämpfvorrichtung wird begrenzt, indem durch eine Betätigung der Einstellvorrichtung über die Koppelvorrichtung die Länge des Hubes der Dämpfvorrichtung mitverstellt wird. Bei Verwendung eines Lineardämpfers kann eine Ausfahrbewegung einer Kolbenstange bzw. eines Stößels des Lineardämpfers durch einen mit der Einstellvorrichtung bewegungsgekoppelten Anschlag begrenzt werden, sodass die Kolbenstange oder der Stößel bei der Rückstellung nur mehr über einen Teilweg des maximalen Hubes ausfahren kann. Bei Verwendung eines Rotationsdämpfers kann hingegen der Drehhub eines drehbar gelagerten Dämpfungsbauteiles begrenzt werden, sodass sich dieses Dämpfungsbauteil nur über einen begrenzten Drehwinkelbereich des maximalen Drehhubes rückstellen lässt. Durch diese Maßnahmen kann der Dämpfungsweg der Dämpfvorrichtung an das Gewicht der jeweiligen Möbelklappe angepasst werden, wobei durch die Begrenzung des Dämpfungshubes auch leichtere Möbelklappen - welche nur einen geringeren Dämpfungshub benötigen - ordnungsgemäß gedämpft werden (Fig. 1b).
3.) Die Dämpfleistung der Dämpfvorrichtung ist einstellbar. Gemäß einer ersten Variante kann hierbei vorgesehen sein, dass bei einer Betätigung der Einstellvorrichtung über die Koppelvorrichtung eine verstellbare Drossel der Dämpfvorrichtung zur regulierbaren Dämpfung mitverstellt wird. Auf diese Weise kann auf die Strömungsgeschwindigkeit des im Inneren der Dämpfvorrichtung befindlichen Dämpfungsfluides Einfluss genommen werden (Fig. 1c). Die Dämpfvorrichtung kann dabei zumindest einen vom Dämpfungsmedium durchströmten Kanal aufweisen, wobei durch Betätigung der Einstellvorrichtung über die Koppelvorrichtung der Strömungsquerschnitt dieses Kanals veränderbar einstellbar ist. Dämpfer mit solchen Drosselverstellungen sind an sich bereits bekannt, wobei eine so genannte Zahnregulierung (Herausziehen und Drehen der Kolbenstange) oder eine Nadelregulierung (Regulierschraube vorne in der Kolbenstange) vorgesehen werden kann.
4.) Gemäß einer zweiten Variante ist die Dämpfleistung der Dämpfvorrichtung einstellbar, indem durch eine Betätigung der Einstellvorrichtung über die Koppelvorrichtung auch ein mit dem Stellarm bewegungsgekoppeltes Anschlagelement zum Beaufschlagen der Dämpfvorrichtung relativ zum Gehäuse des Stellantriebes mitverstellbar ist. Durch die jeweilige Geometrie und Größe des Anschlagelementes kann der Stößel der Dämpfvorrichtung nach erfolgter Kontaktierung mit dem Anschlagelement mehr oder weniger weit in den Zylinder der Dämpfvorrichtung eingedrückt werden, wodurch also der Dämpfweg eingestellt werden kann. Bei einem drehbar gelagerten Anschlagelement kann zudem durch Verstellen eines Stellgliedes entlang einer Führung die Winkelgeschwindigkeit des Anschlagelementes verändert werden, wodurch auch die Schließgeschwindigkeit und damit die Dämpfleistung der Dämpfvorrichtung einstellbar ist.

Die Koppelvorrichtung zur Kopplung zwischen Einstellvorrichtung und Dämpfvorrichtung kann ein Getriebe mit Zahnrädern oder mit zusammenwirkenden Verzahnungen, ein mechanisches Hebelwerk, einen Seilzug und/oder eine elektrische Kopplung (beispielsweise mit einem Hall-Sensor zur Erfassung einer Betätigung der Einstellvorrichtung und mit einem Elektromotor zum elektromotorischen Verstellen der Dämpfvorrichtung) umfassen.

Die mit der Einstellvorrichtung gekoppelte Dämpfungsvorrichtung des Stellantriebes ist insbesondere mit Stellantrieben verwendbar, die einen Übertragungsmechanismus mit einer verstellbaren Hebelgeometrie (insbesondere mit einer verstellbaren Totpunktlage des Stellarmes) umfassen. Der Stellarm ist dabei durch die Federvorrichtung innerhalb eines ersten Schwenkwinkelbereiches in Schließrichtung und innerhalb eines zweiten Schwenkwinkelbereiches in Öffnungsrichtung beaufschlagt, wobei der Stellarm zwischen dem ersten und zweiten Schwenkwinkelbereich eine Totpunktlage aufweist, in welcher der Stellarm von der Federvorrichtung weder in Schließrichtung noch in Öffnungsrichtung beaufschlagt ist.

Der Totpunktmechanismus kann dabei - wie an sich bekannt - ein Hebelwerk (DE 102 03 269 A1) aufweisen, wobei die Federvorrichtung auf den Stellarm nahe der Schließstellung eine Schließkraft und nach Überschreiten einer Totpunktlage - bei welcher die verbindenden Gelenke der Hebel und die einwirkenden Kraftvektoren auf einer Linie liegen - ein Drehmoment in Öffnungsrichtung ausübt. Ebenso bekannt sind Totpunktmechanismen mit einer Steuerkurven-Druckstück-Anordnung (DE 10 2004 019 785 A1), bei welcher die Steuerkurve derart konturiert ist, dass der Wechsel des auf den Stellarm einwirkenden Drehmomentes nach dem Durchlauf einer Totpunktlage stattfindet.

Dabei kann vorgesehen sein, dass die Einstellvorrichtung zur Einstellung des Totpunktes des Stellarmes über die Koppelvorrichtung mit der Dämpfvorrichtung gekoppelt ist, sodass eine Einstellung des Totpunktes des Stellarmes eine korrespondierende Verstellung der Wirkbeginnslage der Dämpfvorrichtung bewirkt. Mit anderen Worten ist bei einer Einstellung der Totpunktlage des Stellarmes gleichzeitig auch die Lage der Dämpfvorrichtung in Bezug zum Gehäuse des Stellantriebes mitverstellbar, sodass die Dämpfvorrichtung stets bei der jeweilig vorliegenden Totpunktlage des Stellarmes zu wirken beginnt.

Die Dämpfvorrichtung kann ein bewegbar gelagertes Betätigungsteil zur Krafteinleitung in die Dämpfvorrichtung aufweisen, welches gegen Ende der Schließbewegung und/oder gegen Ende der Öffnungsbewegung des Stellarmes entweder vom Stellarm selbst oder von einem mit dem Stellarm bewegungsgekoppelten Anschlagelement beaufschlagbar ist.

Die Dämpfvorrichtung ist vorzugsweise als Lineardämpfer mit einer Kolben-Zylinder-Einheit ausgebildet, wobei das Betätigungsteil von einer Kolbenstange des Lineardämpfers, vom Zylinder oder von einem mit dem Zylinder oder mit der Kolbenstange mitbewegten Stößel gebildet ist. Alternativ kann die Dämpfvorrichtung auch einen Rotationsdämpfer umfassen, wobei das Betätigungsteil von einer Zahnstange, welches mit einem drehbar gelagerten Ritzel in Eingriff steht, gebildet ist.

Gemäß einem Ausführungsbeispiel kann vorgesehen sein, dass durch die Einstellvorrichtung die Lage des Totpunktes des Stellarmes - ausgehend von der vollständigen Schließstellung des Stellarmes - zwischen 10° und 30°, vorzugsweise zwischen 15° und 25°, veränderbar einstellbar ist.

Weitere Einzelheiten und Vorteile der gegenständlichen Erfindung werden anhand der in den Figuren gezeigten Ausführungsbeispiele erläutert. Dabei zeigt bzw. zeigen:
- Fig. 1a-1c: stark schematisierte Ansichten eines Stellantriebes, wobei durch eine Betätigung der Einstellvorrichtung über eine Koppelvorrichtung die Lage der Dämpfvorrichtung relativ zum Gehäuse, der Dämpfungshub der Dämpfungsvorrichtung und/oder die Dämpfleistung der Dämpfvorrichtung veränderbar einstellbar ist,
- Fig. 2a, 2b: eine perspektivische Ansicht eines Möbels mit einem Möbelkorpus und einer relativ dazu hochbewegbaren Klappe, welche über Stellantriebe bewegbar gelagert ist, sowie einen Stellantrieb in einer perspektivischen Darstellung,
- Fig. 3: der Stellantrieb gemäß Fig. 2b in einer Explosionsdarstellung,
- Fig. 4: ein Diagramm der Drehmomentverläufe in Abhängigkeit vom Öffnungswinkel der Klappe,
- Fig. 5a, 5b: der Stellantrieb im Querschnitt mit zwei voneinander abweichenden Einstellungen eines Stellgliedes relativ zu einer Führung,
- Fig. 6a, 6b: der Stellantrieb mit den unterschiedlichen Einstellungen des Stellgliedes gemäß Fig. 5a und Fig. 5b, wobei sich der Stellarm jeweils in der vollständig geschlossenen Endlage befindet.

Fig. 1a-1c zeigen drei verschiedene Ausführungsformen eines Stellantriebes 4 in stark schematisierten Ansichten. Die Stellantriebe 4 weisen jeweils ein Gehäuse 6, einen im oder am Gehäuse 6 um eine, vorzugsweise in Montagelage horizontal verlaufende, Drehachse 13 schwenkbar gelagerten Stellarm 5 zum Bewegen einer (hier nicht dargestellten) Möbelklappe 3, eine Federvorrichtung 8 zur Kraftbeaufschlagung des Stellarmes 5, einen Übertragungsmechanismus 10 zum Übertragen einer Kraft der Federvorrichtung 8 auf den Stellarm 5, eine Einstellvorrichtung 23 zur Einstellung einer Hebelgeometrie des Übertragungsmechanismus 10 und/oder zur Einstellung einer auf den Stellarm 5 wirkenden Kraft der Federvorrichtung 8 sowie eine Dämpfvorrichtung 32 zur Dämpfung einer Bewegung des Stellarmes 5 auf. Die Dämpfvorrichtung 32 ist in den gezeigten Ausführungsbeispielen jeweils als Lineardämpfer mit einer Zylinder-Kolben-Einheit ausgebildet, wobei der Stellarm 5 gegen Ende der Schließbewegung auf den Stößel 7 der Dämpfvorrichtung 32 auftrifft, woraufhin die Einfahrbewegung eines Stößels 7 relativ zum Zylinder 38 gegen den Widerstand eines Dämpfungsfluids dämpfbar ist. Die Einstellvorrichtung 23 ist jeweils über eine Koppelvorrichtung 18 mit der Dämpfvorrichtung 32 gekoppelt, sodass gemäß Fig. 1a durch eine Einstellung der Einstellvorrichtung 23 die Dämpfvorrichtung 32 in ihrer Gesamtheit relativ zum Gehäuse 6 des Stellantriebes 4 in Richtung der beiden eingezeichneten Doppelpfeile verschiebbar und/oder schwenkbar ist. Auf diese Weise kann der Auftreffpunkt des Stellarmes 5 relativ zum Stößel 7 eingestellt werden.

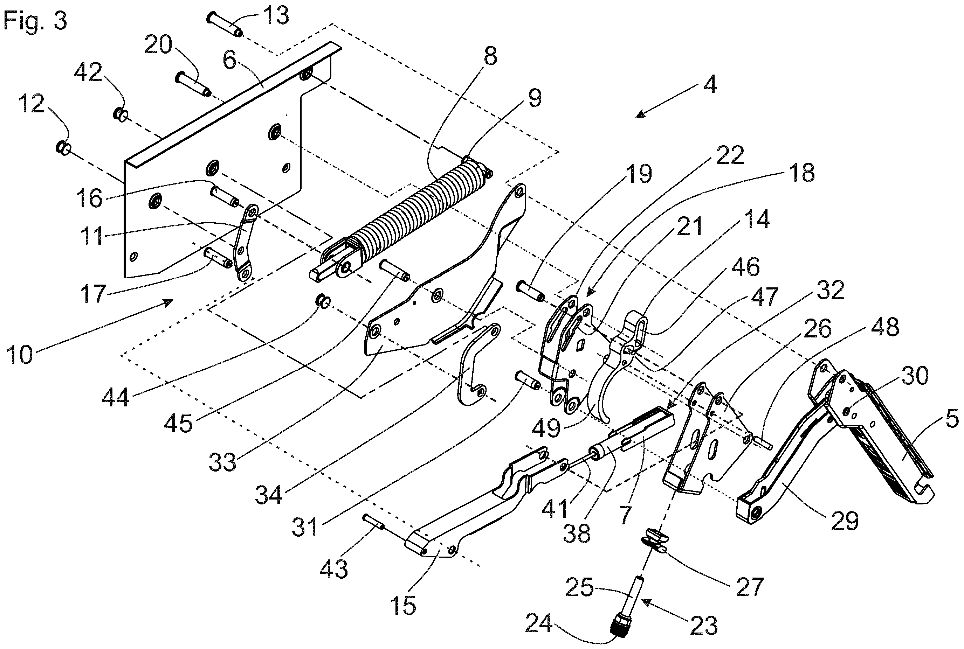

Fig. 1b zeigt den Stellantrieb 4, wobei die Einstellvorrichtung 23 über die Koppelvorrichtung 18 mit dem linear verfahrbaren Stößel 7 der Dämpfvorrichtung 32 zusammenwirkt. Dabei ist eine Ausfahrbewegung des Stößels 7 relativ zum Zylinder 38 durch einen mit der Einstellvorrichtung 23 bewegungsgekoppelten Anschlag begrenzbar, sodass die Kolbenstange 41 (Fig. 3) oder der Stößel 7 bei der Rückstellung nur mehr über einen Teilweg des maximalen Hubes ausfahren kann. Durch eine Begrenzung der Ausfahrbewegung des Stößels 7 liegt ein verkürzter Dämpfungshub vor, wodurch leichtere Möbelklappen 3 aufgrund des reduzierten Dämpfungsweges schneller in die geschlossene Endlage gelangen können.

Fig. 1c zeigt den Stellantrieb 4, wobei die Einstellvorrichtung 23 über die Koppelvorrichtung 18 mit einer verstellbaren Drossel 40 der Dämpfvorrichtung 32 koppelbar ist. Durch eine Betätigung der Einstellvorrichtung 23 wird über die Koppelvorrichtung 18 die verstellbare Drossel 40 der Dämpfvorrichtung 32 zur Regulierung der Strömungsgeschwindigkeit des Dämpfungsfluides mitverstellt. Im gezeigten Ausführungsbeispiel wird beim Dämpfungshub das im Zylinder 38 befindliche, hydraulische Dämpfungsmedium durch eine Bewegung des mit dem Stößel 7 verbundenen Kolbens in einen Kanal 51 gedrängt, welcher ausgehend vom Zylinder 38 zu einem Ausgleichsbehälter 50 mit einem darin befindlichen, federbelasteten Ausgleichskolben führt. Durch die über die Koppelvorrichtung 18 ansteuerbare Drossel 40 ist der Strömungsquerschnitt dieses Kanals 51 veränderbar, beispielweise durch eine Scheibe, welche mit einem durch die Koppelvorrichtung 18 ansteuerbaren Verstellelement (beispielsweise einen Exzenter) zum Verstellen dieser Scheibe bewegungsgekoppelt in Eingriff steht.

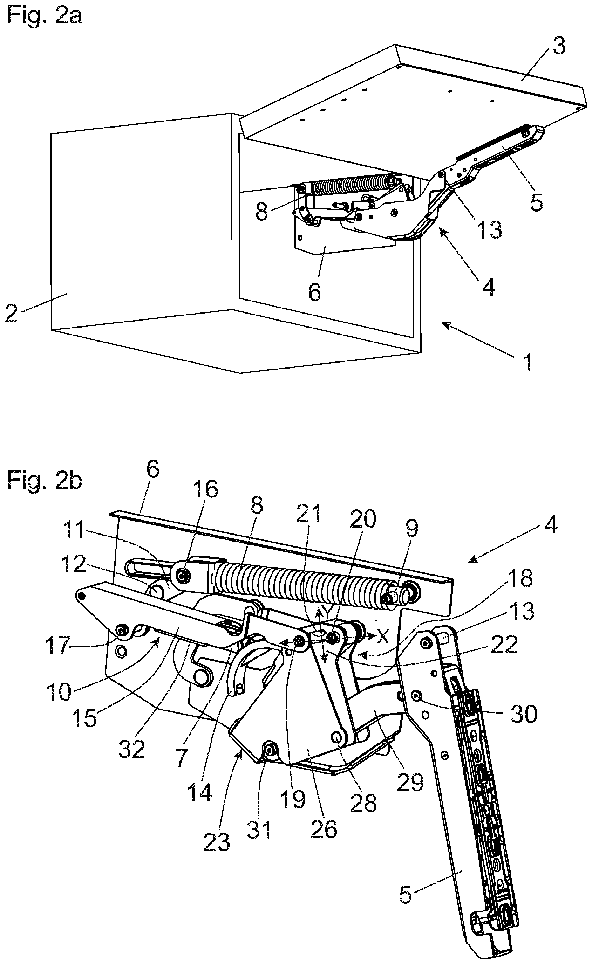

Fig. 2a zeigt ein Möbel 1 mit einem Möbelkorpus 2 und einer relativ dazu hochbewegbaren Klappe 3, welche über zumindest einen Stellantrieb 4 bewegbar gelagert ist. Der Stellantrieb 4 weist ein Gehäuse 6 und zumindest einen am oder im Gehäuse 6 drehbar gelagerten Stellarm 5 auf, welcher durch eine Federvorrichtung 8 beaufschlagt, in Montagelage um eine horizontal verlaufende Drehachse 13 schwenkbar gelagert und in Montagelage mit der Klappe 3 verbunden ist. Durch den Stellantrieb 4 ist die Klappe 3 ausgehend von einer vertikalen Schließstellung in eine oberhalb des Möbelkorpus 2 befindliche Offenstellung bewegbar.

Fig. 2b zeigt ein mögliches Ausführungsbeispiel eines Stellantriebes 4 in einer perspektivischen Ansicht. Das am Möbelkorpus 2 zu befestigende Gehäuse 6 beinhaltet eine Federvorrichtung 8 (vorzugsweise mit einer oder mehreren Druckfedern), die mit einem Endbereich an einer ortsfesten Federbasis 9 am Gehäuse 6 abgestützt ist. Zur Übertragung einer Kraft von der Federvorrichtung 8 auf den um die Drehachse 13 schwenkbar gelagerten Stellarm 5 ist ein Übertragungsmechanismus 10 vorgesehen, der einen um eine ortsfeste Drehachse 12 schwenkbar gelagerten, zweiarmigen Umlenkhebel 11 mit zwei Hebelenden umfasst. Ein erstes Hebelende des zweiarmigen Umlenkhebels 11 ist über ein erstes Gelenk 16 mit der Federvorrichtung 8 verbunden, ein zweites Hebelende des Umlenkhebels 11 steht über ein zweites Gelenk 17 mit einem Schubhebel 15 in Verbindung. An einem dem Gelenk 17 abgewandten Ende des Schubhebels 15 ist ein verstellbares Stellglied 19 gelagert. Ferner ist eine Koppelvorrichtung 18 vorgesehen, welche die Federvorrichtung 8, die Drehachse 13 des Stellarmes 5, das Stellglied 19 und ein mit dem Stellarm 5 bewegungsgekoppeltes Anschlagelement 14 zum Beaufschlagen einer Dämpfvorrichtung 32 miteinander koppelt. Die Dämpfvorrichtung 32 ist im gezeigten Ausführungsbeispiel am relativ zum Gehäuse 6 bewegbaren Schubhebel 15 gelagert und umfasst einen linear verfahrbaren Stößel 7, welcher gegen Ende der Schließbewegung des Stellarmes 5 vom Anschlagelement 14, welches mit dem Stellarm 5 bewegungsgekoppelt verbunden ist, beaufschlagt wird. Durch die Einstellvorrichtung 23 ist die Lage des Stellgliedes 19 in oder an der, vorzugsweise gekrümmten, Führung 21 in Richtung zur Gelenkachse 20 des Hebels 22 hin und von dieser weg verstellbar, wobei der relative Abstand zwischen Stellglied 19 und Gelenkachse 20 des Hebels 22 entlang einer gedachten Verbindungslinie zwischen Stellglied 19 und Gelenkachse 20 des Hebels 22 in Richtung (X) verkleinerbar und vergrößerbar ist. Durch eine Verstellung des Stellgliedes 19 in Richtung (X) ist das auf den Stellarm 5 wirkende Drehmoment der Federvorrichtung 8 in Öffnungsrichtung einstellbar. Überdies ist durch die Einstellvorrichtung 23 die Lage des Stellgliedes 19 in oder an der Führung 21 in einer quer zur besagten, gedachten Verbindungslinie verlaufenden Richtung (Y) einstellbar, wodurch die Totpunktlage des Stellarmes 5 veränderbar einstellbar ist. Durch die Auswahl der Steigung bzw. Krümmung der Führung 21 kann bestimmt werden, in welchem Ausmaß die Einstellung der Totpunktlage und die Einstellung der in Öffnungsrichtung wirkenden Federkraft erfolgt. Durch die Einstellvorrichtung 23 ist also die Lage der Dämpfvorrichtung 32 relativ zum Gehäuse 6 des Stellantriebes 4 veränderbar einstellbar, wobei die Dämpfvorrichtung 32 entweder direkt am Gehäuse 6, an einem relativ zum Gehäuse 6 bewegbaren Teil (beispielsweise am Schubhebel 15) oder auch losgelöst vom Gehäuse 6 gelagert werden kann.

Im gezeigten Ausführungsbeispiel weist die Koppelvorrichtung 18 einen um eine ortsfeste Gelenkachse 20 schwenkbaren Hebel 22 mit einer Führung 21 auf. In oder entlang dieser Führung 21 ist die Lage des Stellgliedes 19 durch eine einzige (hier nicht näher ersichtliche) Einstellvorrichtung 23 verstellbar, sodass durch Verstellen des Stellgliedes 19 in oder an dieser Führung 21 sowohl die Lage des Totpunktes des Stellarmes 5, eine dazu korrespondierende Wirkbeginnslage der Dämpfvorrichtung 32 als auch die in Öffnungsrichtung wirkende Kraft der Federvorrichtung 8 auf den Stellarm 5 gleichzeitig einstellbar ist. In der gezeigten Figur befindet sich die Lage des Stellgliedes 19 in einer zur ortsfesten Gelenkachse 20 des Hebels 22 entfernten Position, sodass der zwischen der Gelenkachse 20 und dem Stellglied 19 gebildete Kraftarm relativ groß und damit das auf den Stellarm 5 in Öffnungsrichtung wirkende Drehmoment maximal eingestellt ist. Diese Einstellung des Stellgliedes 19 relativ zur Führung 21 wird zum Bewegen schwerer Möbelklappen 3 eingesetzt.

Fig. 3 zeigt den Stellantrieb 4 gemäß Fig. 2b in einer Explosionsdarstellung. Die Federvorrichtung 8 ist am Gehäuse 6 an einer Federbasis 9 ortsfest, aber gelenkig abgestützt. Der Übertragungsmechanismus 10 umfasst einen um eine ortsfeste Drehachse 12 schwenkbar gelagerten, zweiarmigen Umlenkhebel 11 mit zwei Hebelenden, wobei ein erstes Hebelende über ein erstes Gelenk 16 mit der Federvorrichtung 8 und ein zweites Hebelende über ein zweites Gelenk 17 mit einem Schubhebel 15 gelenkig verbunden ist. An diesem Schubhebel 15 ist die Dämpfvorrichtung 32 in Form der Kolben-Zylinder-Einheit gelagert, wobei der Zylinder 38 des Lineardämpfers innerhalb eines U-förmigen Abschnittes des Schubhebels 15 aufgenommen ist und wobei sich das freie Ende der Kolbenstange 41 an einem mit dem Schubhebel 15 verbundenen Anschlag 43 abstützt. Mit dem Zylinder 38 ist ein Stößel 7 verbunden, der bei der Schließbewegung des Stellarmes 5 durch ein mit dem Stellarm 5 bewegungsgekoppelten Anschlagelement 14, vorzugsweise durch einen gekrümmten Abschnitt 49 desselben, beaufschlagbar ist. Der Schubhebel 15 steht mit einem schwenkbaren Verstellhebel 26, einem ersten Langloch 47 des Anschlagelementes 14 und mit dem schwenkbaren Hebel 22 gelenkig in Verbindung, nämlich über das Stellglied 19, welches durch die Einstellvorrichtung 23 entlang der Führung 21 des Hebels 22 verstellbar gelagert ist. Der Verstellhebel 26 ist über eine Gelenkachse 48 schwenkbar mit dem Anschlagelement 14 verbunden. Der Hebel 22 ist um eine am Gehäuse 6 angeordnete, ortsfeste Gelenkachse 20 schwenkbar gelagert, wobei die Gelenkachse 20 auch ein zweites Langloch 46 des Anschlagelementes 14 durchgreift. Der Zwischenhebel 29 ist mit dem Stellarm 5 über ein Gelenk 30 verbunden, das andere Ende des Zwischenhebels 29 steht über die relativ zum Gehäuse 6 wandernde Gelenkachse 31 mit dem schwenkbaren Hebel 22 in Verbindung. Der Hebel 22 ist über eine wandernde Gelenkachse 45 mit einem länglichen Haupthebel 33 verbunden, welcher über eine Gelenkachse 44 mit einem Gelenkhebel 34 verbunden ist. Der Gelenkhebel 34 ist am Gehäuse 6 an einer ortsfesten Gelenkachse 42 schwenkbar gelagert.

Die Einstellvorrichtung 23 weist ein am Verstellhebel 26 drehbar gelagertes Verstellrad 24 mit einer Aufnahme für ein Betätigungswerkzeug auf, wobei durch Drehung der Aufnahme mittels des Betätigungswerkzeuges die Lage des Stellgliedes 19 entlang der Führung 21 einstellbar ist. Durch Verdrehen des Verstellrades 24 ist ein Gewindeabschnitt 25 rotierbar, der mit einer am Hebel 22 angeordneten Gewindeaufnahme 27 in Gewindeeingriff steht. Durch Verdrehen des Verstellrades 24 wird also auch der Gewindeabschnitt 25 mitverdreht, sodass die Gewindeaufnahme 27 (und so der damit verbundene Hebel 22) in Richtung des Verstellrades 24 hin und davon wegbewegbar ist. Auf diese Weise ist die Neigung des Verstellhebels 26 relativ zu dem um die ortsfeste Gelenkachse 20 gelagerten Hebel 22 verstellbar, wobei sich auch die Lage des Stellgliedes 19 entlang der Führung 21 des Hebels 22 verändert. Da aber am Stellglied 19 sowohl das Anschlagelement 14 als auch der Schubhebel 15 (mit der daran gelagerten Dämpfvorrichtung 32) angreifen, führt eine Verstellung des Stellgliedes 19 entlang der Führung 21 auch zu einer in Bezug zum Gehäuse 6 verstellten Lage der Dämpfvorrichtung 32 sowie zu einer verstellten Lage des Anschlagelementes 14.

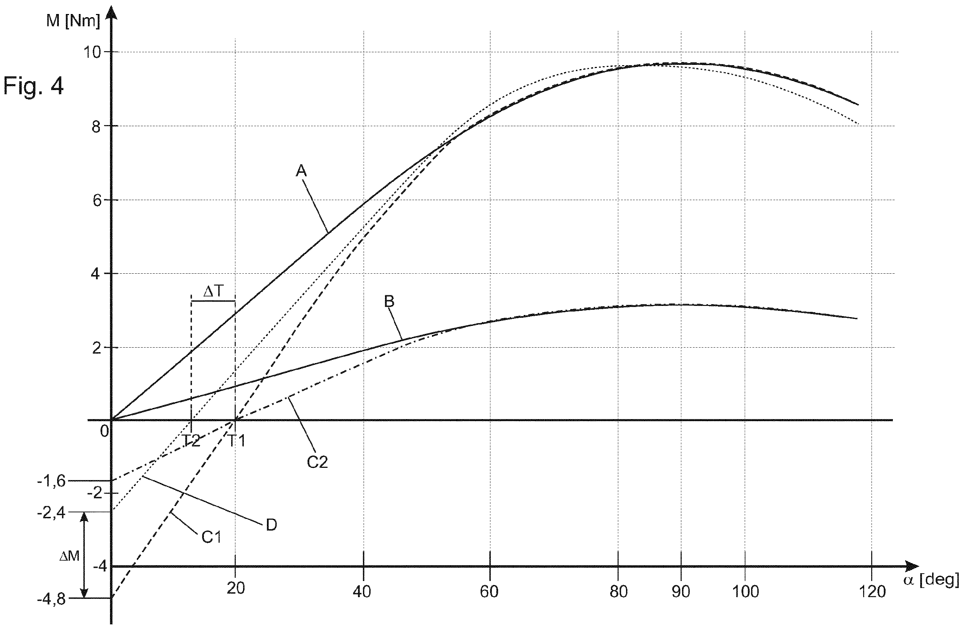

Fig. 4 zeigt ein Diagramm der Drehmomentverläufe (Drehmoment M in Newtonmeter, Nm) in Abhängigkeit des Öffnungswinkels (in Grad, α) der Klappe 3 eines Möbels 1. Die Kennlinie A zeigt den (theoretischen) Verlauf des Drehmomentes aufgetragen über der Winkelstellung der Klappe 3, welches vom Stellantrieb 4 aufzubringen ist, wobei die Klappe 3 vom Stellantrieb 4 weder in Öffnungsrichtung noch in Schließrichtung beschleunigt und somit austariert gehalten wird. Diese Kennlinie A entspricht der maximalen Einstellung des Drehmomentes in Öffnungsrichtung, was also bei schweren Möbelklappen 3 vorzusehen ist. Ausgehend von 0° Öffnungswinkel der Klappe 3 wird diese über einen Öffnungswinkelbereich geöffnet, wobei das Maximum der Kennlinie A bei etwa 90° Öffnungswinkel der Klappe 3 liegt. Bei 90° Öffnungswinkel der Klappe 3 muss nämlich der Stellantrieb 4 das höchste Drehmoment bereitstellen, damit die Klappe 3 in dieser Lage durch die Kraft der Federvorrichtung 8 selbsttätig gehalten ist.

Die Kennlinie B zeigt den (theoretischen) Verlauf des Drehmomentes aufgetragen über der Winkelstellung der Klappe 3, welches vom Stellantrieb 4 aufzubringen ist, wobei die Klappe 3 vom Stellantrieb 4 weder in Öffnungsrichtung noch in Schließrichtung beschleunigt und somit austariert gehalten wird. Diese Kennlinie B entspricht der minimalen Einstellung des Drehmomentes in Öffnungsrichtung, was also bei leichten Möbelklappen 3 vorzusehen ist. Das Maximum dieser Kennlinie B liegt ebenfalls bei 90° Öffnungswinkel der Klappe 3, wobei das bereitgestellte Drehmoment des Stellantriebes 4 in Öffnungsrichtung geringer als jenes gemäß Kennlinie A ist.

Die Kennlinie C1 zeigt den Verlauf des vom Stellantrieb 4 auf den Stellarm 5 und damit auf die Klappe 3 ausgeübten Drehmomentes. Diese Kennlinie entspricht der maximalen Einstellung des Drehmomentes in Öffnungsrichtung (bei Verwendung von schweren Möbelklappen 3), wobei man für große Winkelstellungen - ohne Berücksichtigung der Reibung - ab etwa 40° Offenstellung der Klappe 3 eine Annäherung an die Kennlinie A erreicht. In der vollständigen Schließstellung (bei 0° Öffnungswinkel) wird auf die Klappe 3 eine negative Kraft ausgeübt, sodass die Klappe 3 mit einer Zuhaltekraft in der geschlossenen Endlage gehalten ist. Nach dem Durchlauf eines Totpunktes T1 wird die Klappe 3 mit einem hohen Drehmoment in Öffnungsrichtung beaufschlagt. Wenn die Klappe 3 wieder geschlossen wird, so wird vom Stellantrieb 4 nach dem Durchlauf des Totpunkes T1 aufgrund des hohen Drehmomentes in Öffnungsrichtung auch eine hohe Zuhaltekraft (-4,8 Nm) auf die Klappe 3 ausgeübt. Diese hohe Zuhaltekraft muss jedes Mal von einem Benutzer durch kraftvolle Zugausübung an der Klappe 3 überwunden werden.

Die Kennlinie C2 zeigt den Verlauf des vom Stellantrieb 4 auf den Stellarm 5 und damit auf die Klappe 3 ausgeübten Drehmomentes bei minimaler Einstellung des in Öffnungsrichtung wirkenden Drehmomentes, was also bei leichten Möbelklappen 3 vorzusehen ist. Dieses niedrige Drehmoment in Öffnungsrichtung führt nach Durchlauf des Totpunktes T1 auch zu einer geringeren Zuhaltekraft (-1,6 Nm), welche durch einen Benutzer beim Öffnen der Klappe 3 ohne großen Kraftaufwand zu überwinden ist. Erkennbar ist, dass sich bei der Einstellung der minimalen bzw. maximalen Federkraft (Kennlinie C1 und Kennlinie C2) ein erheblicher Unterschied der Zuhaltekraft (nämlich -2,4 Nm und -1,6 Nm) ergibt, was für jene Person, welche die Klappe 3 öffnen muss, nachteilig ist.

Durch Verstellen des Stellgliedes 19 entlang der Führung 21 kann die Lage des Totpunktes T1 des Stellarmes 5 weiter in Richtung Schließstellung zum Totpunkt T2 positioniert werden. Die Kennlinie D zeigt den Drehmomentverlauf des Stellantriebes 4 bei in Öffnungsrichtung maximal eingestellter Federkraft (also bei Verwendung schwerer Klappen 3). Wenn nun die Klappe 3 geschlossen wird, so durchläuft der Stellarm 5 den Totpunkt T2, wobei durch die verstellte Lage des Totpunktes T2 anhand des Diagramms auch unmittelbar einsichtig ist, dass sich die Zuhaltekraft bei 0° Öffnungswinkel der Klappe 3 (aber bei gleich hohem Drehmoment in Öffnungsrichtung wie Kennlinie C1) um die Kräftedifferenz ΔM erheblich reduziert (-2,4 Nm statt -4,8 Nm, also um die Hälfte). Somit wird durch eine verstellte Position des Totpunktes ausgehend von Totpunkt T1 zu Totpunkt T2 eine Phasenverschiebung des Drehmomentverlaufes (Kennlinie D statt Kennlinie C1) um einen Betrag ΔT herbeigeführt, sodass sich in der Schließstellung der Klappe (bei 0° Öffnungswinkel des Klappe 3) selbst bei hohem Drehmoment in Öffnungsrichtung eine geringe Zuhaltekraft ergibt, welche durch eine Person beim Öffnen der Klappe 3 problemlos zu überwinden ist. Diese Phasenverschiebung der Kennlinien C1, D um den Betrag ΔT ist auch bei 90° Öffnungswinkel der Klappe 3 gut erkennbar.

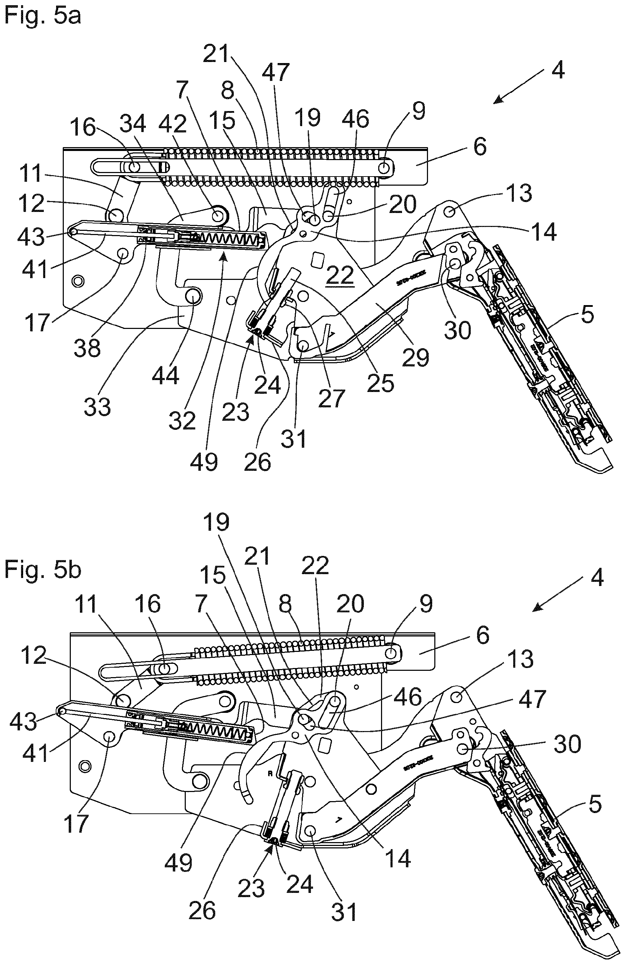

Fig. 5a und Fig. 5b zeigen den Stellantrieb 4 mit zwei verschiedenen Einstellungen des Stellgliedes 19 relativ zur Führung 21, wobei sich die Dämpfvorrichtung 32 jeweils in einer Wirkbeginnslage (also am Beginn des Dämpfungshubes) befindet. In Fig. 5a ist das verstellbare Stellglied 19 relativ zur Führung 21 in einer relativ zur stationären Gelenkachse 20 des Hebels 22 benachbarten Position, sodass der zwischen der stationären Gelenkachse 20 und dem verstellbaren Stellglied 19 gebildete Kraftarm klein und folglich auch das auf den Stellarm 5 in Öffnungsrichtung wirkende Drehmoment minimal eingestellt ist. Diese Einstellung des Stellgliedes 19 relativ zur Führung 21 wird folglich zum Bewegen leichter Möbelklappen 3 verwendet und entspricht der Kennlinie C2 gemäß Fig. 4.

In Fig. 5b wurde hingegen durch Verdrehen des Verstellrades 24 das Stellglied 19 relativ zur Führung 21 in eine in Bezug zur ortsfesten Gelenkachse 20 entfernte Position bewegt, sodass der zwischen der Gelenkachse 20 und dem verstellbaren Stellglied 19 gebildete Kraftarm groß und folglich auch das auf den Stellarm 5 in Öffnungsrichtung wirkende Drehmoment maximal eingestellt ist. Zu erkennen ist, dass durch eine Verstellung des Stellgliedes 19 entlang der Führung 21 auch die Lage der Dämpfvorrichtung 32 in Bezug zum Gehäuse 6 mitverstellbar ist, sodass der Dämpfbeginn stets bei der gleichen Schwenklage des Stellarmes 5 stattfindet (bei etwa 30° Öffnungswinkel des Stellarmes 5). Überdies ist mit einer Verstellung der Lage des Stellgliedes 19 auch das Anschlagelement 14 mit dem daran ausgebildeten gekrümmten Abschnitt 49 mitverstellbar, wodurch der Dämpfweg und die Schließgeschwindigkeit der Dämpfvorrichtung 32 veränderbar einstellbar ist. Bei großen oder schweren Möbelklappen 3 wird die in Fig. 5b gezeigte Einstellung des Stellgliedes 19 verwendet, wobei das Anschlagelement 14 - aufgrund der größeren Abstandes zwischen der ortsfesten Gelenkachse 20 und des einstellbaren Stellgliedes 19 - eine höhere Winkelgeschwindigkeit als bei der minimalen Drehmomenteinstellung gemäß Fig. 5a aufweist und der Stößel 7 der Dämpfvorrichtung 32 weiter eingedrückt und damit der Dämpfweg vergrößert wird. Auf diese Weise kann die Dämpfleistung an das jeweilige Gewicht der Möbelklappe 3 angepasst werden.

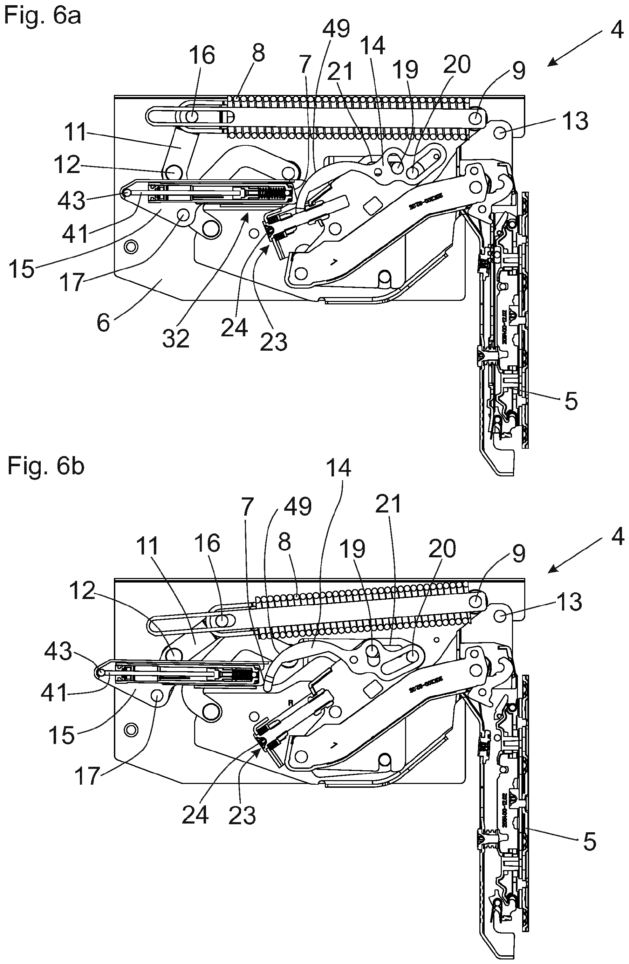

Fig. 6a zeigt den Stellantrieb 4 mit minimaler Krafteinstellung gemäß Fig. 5a, wobei sich der Stellarm 5 in der Schließstellung und die Dämpfvorrichtung 32 am Ende des Dämpfungshubes befinden. Gegen Ende der Schließbewegung trifft der gekrümmte Abschnitt 49 des Anschlagelementes 14 auf den Stößel 7 der Dämpfvorrichtung 32 auf, wobei der Zylinder 38 des Lineardämpfers relativ zur feststehenden Kolbenstange 41 - welche sich am Schubhebel 15 am Anschlag 43 abstützt - verschoben und damit die Schließbewegung des Stellarmes 5 dämpfbar ist.

Fig. 6b zeigt hingegen den Stellantrieb 4 mit maximaler Krafteinstellung auf den Stellarm 5 gemäß Fig. 5b, wobei sich der Stellarm 5 in der Schließstellung und die Dämpfvorrichtung 32 am Ende des Dämpfungshubes befinden. Zu erkennen ist, dass der Stößel 7 - im Vergleich zur Fig. 6a - weiter eingedrückt und dass das freie Ende des Anschlagelementes 14 am Stößel 7 anliegt. Durch das Verstellen des Stellgliedes 19 entlang der Führung 21 wird das Anschlagelement 14 bei der Schließbewegung des Stellarmes 5 im Vergleich zur Einstellung des Stellgliedes 19 gemäß Fig. 6a mit einer höheren Winkelgeschwindigkeit bewegt, sodass auch der Stößel 7 der Dämpfvorrichtung 32 (also die Linearbewegung zwischen Kolben und Zylinder der Dämpfvorrichtung 32) mit einer höheren Schließgeschwindigkeit bewegt wird. Das zum Beaufschlagen der Dämpfvorrichtung 32 vorgesehene Anschlagelement 14 weist ein erstes Langloch 47 und ein zweites Langloch 46 auf (Fig. 3), wobei das verstellbare Stellglied 19 im ersten Langloch 47 und die ortsfeste Gelenkachse 20 im zweiten Langloch 46 eingreift und wobei durch eine Betätigung der Einstellvorrichtung 23 über die Koppelvorrichtung 18 der zwischen der Gelenkachse 20 und dem Stellglied 19 gebildete Abstand und damit die Winkelgeschwindigkeit des mit dem Stellarm 5 bewegungsgekoppelten Anschlagelementes 14 veränderbar einstellbar ist.

Angemerkt sei, dass die Dämpfvorrichtung 32 nicht zwingend im oder am Gehäuse 6 des Stellantriebes 4 angeordnet sein muss. Vielmehr ist es auch möglich, dass die Klappe 3 eine erste Seitenkante aufweist, welche gegenüber dem Möbelkorpus 2 um eine Drehachse schwenkbar gelagert ist und dass die Klappe 3 eine von der ersten Seitenkante parallel beabstandete zweite Seitenkante aufweist, wobei die mit der Einstellvorrichtung 23 über die Koppelvorrichtung 18 gekoppelte Dämpfvorrichtung 32 am Möbelkorpus 2 befestigt ist und gegen Ende der Schließbewegung der Klappe 3 von einem der zweiten Seitenkante der Klappe 3 benachbarten - und von der Drehachse der Klappe 3 abgewandten Bereich - der Klappe 3 beaufschlagbar ist.

## Patentansprüche

1. Stellantrieb (4) zum Bewegen einer Klappe (3) eines Möbels (1), umfassend:
- ein Gehäuse (6),
- zumindest einen am oder im Gehäuse (6) schwenkbar gelagerten Stellarm (5) zum Bewegen der Klappe (3),
- eine Federvorrichtung (8) zur Kraftbeaufschlagung des Stellarmes (5),
- einen Übertragungsmechanismus (10) zum Übertragen einer Kraft der Federvorrichtung (8) auf den Stellarm (5),
- eine Einstellvorrichtung (23), durch welche eine Hebelgeometrie des Übertragungsmechanismus (10) und/oder die auf den Stellarm (5) wirkende Kraft der Federvorrichtung (8) veränderbar einstellbar ist,
- eine Dämpfvorrichtung (32), durch die bei einem Dämpfungshub eine Bewegung des Stellarmes (5) mit einer Dämpfleistung dämpfbar ist,
**dadurch gekennzeichnet, dass** die Einstellvorrichtung (23) über eine Koppelvorrichtung (18) mit der Dämpfvorrichtung (32) gekoppelt ist, wobei durch eine Einstellung der Einstellvorrichtung (23) über die Koppelvorrichtung (18) die Lage der Dämpfvorrichtung (32) relativ zum Gehäuse (6) und/oder der Dämpfungshub der Dämpfvorrichtung (32) und/oder die Dämpfleistung der Dämpfvorrichtung (32) veränderbar einstellbar ist.

2. Stellantrieb nach Anspruch 1, **dadurch gekennzeichnet, dass** der Stellarm (5) durch die Federvorrichtung (8) innerhalb eines ersten Schwenkwinkelbereiches in Schließrichtung und innerhalb eines zweiten Schwenkwinkelbereiches in Öffnungsrichtung beaufschlagt ist, wobei der Stellarm (5) zwischen dem ersten und zweiten Schwenkwinkelbereich eine Totpunktlage (T1, T2) aufweist, in welcher der Stellarm (5) von der Federvorrichtung (8) weder in Schließrichtung noch in Öffnungsrichtung beaufschlagt ist.

3. Stellantrieb nach Anspruch 2, **dadurch gekennzeichnet, dass** durch die Einstellvorrichtung (23) die Totpunktlage (T1, T2) des Stellarmes (5) veränderbar einstellbar ist.

4. Stellantrieb nach Anspruch 3, **dadurch gekennzeichnet, dass** die Dämpfvorrichtung (32) ausgehend von einer Wirkbeginnslage des Stellarmes (5) eine Bewegung des Stellarmes (5) dämpft, wobei durch die Einstellung der Totpunktlage (T1, T2) des Stellarmes (5) über die Koppelvorrichtung (18) eine korrespondierende Verstellung der Wirkbeginnslage der Dämpfvorrichtung (32) erfolgt.

5. Stellantrieb nach Anspruch 4, **dadurch gekennzeichnet, dass** die Einstellvorrichtung (23) ein verstellbares Stellglied (19) aufweist, wobei durch Verstellen des Stellgliedes (19) in oder an einer Führung (21) sowohl die Totpunktlage (T1, T2) des Stellarmes (5) und/oder die Wirkbeginnslage der Dämpfvorrichtung (32) und/oder die in Öffnungsrichtung wirkende Kraft der Federvorrichtung (8) auf den Stellarm (5) veränderbar einstellbar ist.

6. Stellantrieb nach Anspruch 5, **dadurch gekennzeichnet, dass** die Koppelvorrichtung (18) zumindest einen um eine Gelenkachse (20) drehbar gelagerten Hebel (22) aufweist, wobei die Führung (21) an diesem Hebel (22) angeordnet oder ausgebildet ist.

7. Stellantrieb nach Anspruch 6, **dadurch gekennzeichnet, dass** durch die Einstellvorrichtung (23) die Lage des Stellgliedes (19) in oder an der Führung (21) in Richtung zur Gelenkachse (20) des Hebels (22) hin und von dieser weg verstellbar ist, wobei der relative Abstand zwischen Stellglied (19) und Gelenkachse (20) des Hebels (22) entlang einer gedachten Verbindungslinie zwischen Stellglied (19) und Gelenkachse (20) des Hebels (22) in Richtung (X) verkleinerbar und vergrößerbar ist.

8. Stellantrieb nach Anspruch 7, **dadurch gekennzeichnet, dass** durch die Einstellvorrichtung (23) die Lage des Stellgliedes (19) in oder an der Führung (21) in einer quer zur besagten, gedachten Verbindungslinie verlaufenden Richtung (Y) einstellbar ist.

9. Stellantrieb nach einem der Ansprüche 5 bis 8, **dadurch gekennzeichnet, dass** die Einstellvorrichtung (23) ein Verstellrad (24) aufweist, wobei durch Drehung des Verstellrades (24) die Lage des Stellgliedes (19) in oder an der Führung (21) einstellbar ist.

10. Stellantrieb nach einem der Ansprüche 1 bis 9, **dadurch gekennzeichnet, dass** die Dämpfvorrichtung (32) ein bewegbar gelagertes Betätigungselement (7) zur Einleitung einer Kraft in die Dämpfvorrichtung (32) aufweist, wobei das Betätigungselement (7) der Dämpfvorrichtung (32) durch ein mit dem Stellarm (5) bewegungsgekoppeltes Anschlagelement (14) beaufschlagbar ist.

11. Stellantrieb nach Anspruch 10, **dadurch gekennzeichnet, dass** das Betätigungselement (7) der Dämpfvorrichtung (32) als Stößel (7) ausgebildet ist, welcher relativ zu einem Zylinder (38) der Dämpfvorrichtung (32) linear verfahrbar gelagert ist.

12. Stellantrieb nach Anspruch 10 oder 11, **dadurch gekennzeichnet, dass** das mit dem Stellarm (5) bewegungsgekoppelte Anschlagelement (14) als schwenkbar gelagerter Hebel ausgebildet ist.

13. Stellantrieb nach Anspruch 12, **dadurch gekennzeichnet, dass** der als Anschlagelement (14) ausgebildete Hebel einen gekrümmten Abschnitt (49) zum Beaufschlagen der Dämpfvorrichtung (32) aufweist.

14. Stellantrieb nach einem der Ansprüche 1 bis 13, **dadurch gekennzeichnet, dass** die Dämpfvorrichtung (32) einen als Fluiddämpfer ausgebildeten Lineardämpfer aufweist.

15. Anordnung mit einer Klappe eines Möbels und mit einem Stellantrieb nach einem der Ansprüche 1 bis 14, wobei durch den Stellantrieb (5) die Klappe (3) ausgehend von einer vertikalen Schließstellung in eine oberhalb eines Möbelkorpus (2) befindliche Offenstellung bewegbar ist.
